(19) **Europäisches Patentamt / European Patent Office / Office européen des brevets**

(11) **EP 3 882 139 B1**

(12) **FASCICULE DE BREVET EUROPEEN**

(45) Date de publication et mention de la délivrance du brevet:
**13.07.2022 Bulletin 2022/28**

(21) Numéro de dépôt: **21153402.9**

(22) Date de dépôt: **26.01.2021**

(51) Classification Internationale des Brevets (IPC):
**B64C 27/26** (2006.01)    **B64C 13/18** (2006.01)
**B64C 9/00** (2006.01)    **B64C 27/57** (2006.01)

(52) Classification Coopérative des Brevets (CPC):
**B64C 27/26; B64C 9/00; B64C 13/18; B64C 27/57**

(54) **PROCEDE D'AJUSTEMENT AUTOMATIQUE D'UNE PORTANCE D'UN GIRAVION HYBRIDE ET UN GIRAVION HYBRIDE ASSOCIE**

VERFAHREN ZUR AUTOMATISCHEN REGULIERUNG DES AUFTRIEBS EINES HYBRIDEN DREHFLÜGELFLUGZEUGS UND ENTSPRECHENDES HYBRIDES DREHFLÜGELFLUGZEUG

METHOD FOR AUTOMATICALLY ADJUSTING A HYBRID ROTORCRAFT LIFT AND ASSOCIATED HYBRID ROTORCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2020 FR 2002564**

(43) Date de publication de la demande:
**22.09.2021 Bulletin 2021/38**

(73) Titulaire: **Airbus Helicopters**
**13725 Marignane Cedex (FR)**

(72) Inventeurs:
• **EGLIN, Paul**
**13830 ROQUEFORT LA BEDOULE (FR)**
• **HUOT, Rémy**
**13008 MARSEILLE (FR)**

(74) Mandataire: **GPI Brevets**
**1330, rue Guillibert de la Lauzière**
**EuroParc de Pichaury**
**Bât B2**
**13856 Aix en Provence Cedex 3 (FR)**

(56) Documents cités:
EP-A1- 2 666 718    EP-A1- 3 118 112
FR-A1- 2 990 684    US-B2- 8 052 094

**Description**

Le projet menant à cette invention a reçu un financement du programme de recherche et d'innovation Horizon 2020 de l'Union européenne, dans le cadre de la convention de subvention CleanSky 2 N° « GAM-FRC-2014-001 Issue E .

La présente invention se rapporte au domaine technique de la mécanique du vol d'un aéronef à voilure tournante. Plus précisément, elle concerne un procédé d'ajustement automatique d'une portance d'un giravion hybride. De tels giravions hybrides sont des aéronefs à voilure tournante équipés en plus d'au moins une hélice de type propulsive ou tractive.

Un giravion comporte classiquement au moins un rotor principal, assurant à la fois la sustentation et la propulsion de l'aéronef, un fuselage et une motorisation pour entraîner en rotation le ou les rotors principaux.

Tels que décrits dans les documents FR 2990684 et EP 2666718, de tels giravions hybrides peuvent donc également comporter d'une part une ou plusieurs hélices propulsives ou tractives et d'autre part une surface sustentatrice comportant au moins deux demi-ailes situées de part et d'autre d'un plan médian antéropostérieur du fuselage.

Par exemple, deux hélices propulsives à pas variable peuvent être positionnées de part et d'autre de ce plan médian antéropostérieur du fuselage, chaque hélice coopérant avec une ou deux demi-ailes pour les solidariser avec le fuselage.

De plus, chaque demi-aile peut être équipée d'au moins une structure fixe solidarisée au fuselage et d'au moins un volet mobile permettant de modifier la portance de chaque demi-aile et donc plus globalement la portance du giravion hybride.

La fonction principale des deux demi-ailes est donc de participer à la sustentation du giravion hybride lors d'une phase de vol à vitesse d'avancement élevée, la ou les hélices propulsives ou tractives permettant quant à elles d'atteindre une telle vitesse d'avancement. A contrario, on peut parler de vol à vitesse modérée pour les phases de vols de manœuvre et/ou à des vitesses d'avancement inférieures à celle d'un vol de croisière.

En outre, lors d'une phase de vol à vitesse d'avancement élevée, le ou les volets de chaque demi-aile peuvent permettre d'ajuster l'équilibre en tangage de l'aéronef selon des critères prédéfinis par exemple relatifs à l'assiette de l'aéronef ou bien au moment de flexion du mât du rotor principal. Les demi-ailes participent, dans cette configuration, à la portance totale de l'aéronef nécessaire à la sustentation de l'aéronef. Par suite, le rotor principal exerce partiellement la sustentation du giravion hybride en phase de vol à vitesse d'avancement élevée avec éventuellement une contribution à son avancement.

Le pilotage d'un tel giravion hybride lors d'une phase de vol à vitesse d'avancement élevée peut nécessiter des commandes spécifiques afin de modifier la portance des demi-ailes ainsi que le pas des hélices.

En conséquence, lors d'une phase de vol à vitesse d'avancement élevée, la charge de travail du pilote est importante et complexe afin de gérer les commandes spécifiques du giravion hybride en complément des commandes traditionnelles d'un aéronef à voilure tournante.

Par ailleurs, le document US 8 052 094 décrit quant à lui un giravion hybride et un procédé de commande mettant en œuvre différentes lois de commande permettant d'adapter une portance au niveau de l'empennage horizontal de ce giravion.

Le document EP 3 118 112 décrit quant à lui un aéronef combiné muni de deux ailes, chaque aile comportant un volet mobile situé au niveau d'un bord de fuite. De tels volets permettent de générer des efforts aérodynamiques longitudinaux de sens opposés de part et d'autre du fuselage et par conséquent un couple complémentaire s'ajoutant au couple principal produit par le rotor arrière. En outre, le document EP 2666718 divulgue un procédé de commande des volets d'ailes et de l'empennage horizontal d'un hélicoptère hybride.

La présente invention a alors pour objet de proposer un procédé alternatif visant à ajuster automatiquement une portance d'un giravion hybride. Un tel procédé d'ajustement permet de s'affranchir des limitations mentionnées ci-dessus notamment en optimisant le niveau de performance d'un giravion hybride en fonction des conditions de vol et d'une masse de ce giravion. L'invention se rapporte donc à un procédé d'ajustement automatique d'une portance d'un giravion hybride, le giravion hybride comportant :

- un fuselage,
- au moins un rotor principal muni d'une pluralité de pales, le ou les rotors principaux tournant par rapport au fuselage à une vitesse de rotation NR,
- au moins une hélice propulsive ou tractive, et
- au moins deux demi-ailes positionnées de part et d'autre d'un plan médian antéropostérieur du fuselage, les au moins deux demi-ailes comportant d'une part au moins une demi-aile gauche comportant une structure fixe gauche solidarisée au fuselage et au moins un volet gauche mobile par rapport à la structure fixe gauche et d'autre part au moins une demi-aile droite comportant une structure fixe droite solidarisée au fuselage et au moins un volet droit mobile par rapport à la structure fixe droite,.

Le procédé comporte, lors d'une phase de vol nominale, une étape consistant à ajuster automatiquement une portance des au moins deux demi-ailes.

Selon l'invention, le procédé est remarquable en ce que cette étape comporte une succession de sous étapes au cours desquelles :

- on calcule un paramètre d'avancement fonction d'une part d'une vitesse air vraie TAS et d'autre part d'une valeur courante de la vitesse de rotation NR,

- on détermine un objectif de coefficient de portance Czm* du rotor principal, l'objectif de coefficient de portance Czm* étant fonction du paramètre d'avancement,

- on calcule un objectif de portance $F_{rotor}^*$ du rotor principal, l'objectif de portance $F_{rotor}^*$ du rotor principal étant fonction la valeur courante de la vitesse de rotation NR, de conditions atmosphériques courantes et de l'objectif de coefficient de portance Czm*,

- on calcule un objectif de portance $F_{aile}^*$ des au moins deux demi-ailes, l'objectif de portance $F_{aile}^*$ des au moins deux demi-ailes étant fonction de l'objectif de portance $F_{rotor}^*$ du rotor principal et d'une valeur courante d'une masse du giravion hybride,

- on détermine au moins une première consigne $\delta w1$ d'angle de braquage du ou des volets gauches par rapport la structure fixe gauche et au moins une seconde consigne $\delta w2$ d'angle de braquage du ou des volets droits par rapport la structure fixe droite, les au moins une première et au moins une seconde consignes $\delta w1$, $\delta w2$ d'angle de braquage étant fonctions de l'objectif de portance $F_{aile}^*$ des au moins deux demi-ailes et de coefficients aérodynamiques des au moins deux demi-ailes.

Autrement dit, un tel procédé permet, en fonction du paramètre d'avancement du giravion hybride, de faire varier de manière automatique l'orientation angulaire du ou des volets gauches agencés sur la demi-aile gauche et l'orientation angulaire du ou des volets droits agencés sur la demi-aile droite.

La première consigne $\delta w1$ d'angle de braquage et la seconde consigne $\delta w2$ d'angle de braquage peuvent avantageusement être générées par un calculateur d'un système de commande. Un tel calculateur transmet alors la première consigne $\delta w1$ d'angle de braquage et la seconde consigne $\delta w2$ d'angle de braquage à des actionneurs, tels que notamment des vérins à commande électrique, pour adapter les angles de braquage du ou des volets gauches par rapport à la structure fixe gauche et du ou des volets droits par rapport la structure fixe droite.

Si nécessaire, ces actionneurs permettent alors de modifier une position angulaire du ou des volets gauches ou droits par rapport à une structure fixe gauche ou droite en mettant en rotation le ou les volets gauches ou droits autour d'un ou plusieurs axes de rotation.

Le ou les volets gauches ou droits présentent donc chacun au moins un degré de mobilité en rotation par rapport à une structure fixe gauche ou droite. L'axe de rotation de chaque liaison pivot des volets gauches ou droits peut avantageusement être agencé au niveau d'un bord de fuite d'un profil aérodynamique de chaque demi-aile.

Par ailleurs, le paramètre d'avancement du giravion, l'objectif de coefficient de portance Czm* du rotor principal et l'objectif de portance $F_{rotor}^*$ du rotor principal représentent différentes valeurs intermédiaires de calcul calculées par un ou plusieurs calculateurs permettant d'aboutir à la détermination des au moins une première et au moins une seconde consignes $\delta w1$, $\delta w2$ d'angle de braquage.

En revanche, la vitesse air vraie TAS du giravion, la valeur courante de la vitesse de rotation NR, les conditions atmosphériques courantes, telles que notamment la pression et la température, et la valeur courante d'une masse du giravion hybride sont quant à elles des grandeurs qui peuvent être mesurées ou encore estimées au moyen de différents senseurs équipant le giravion hybride. Ces différents senseurs sont par ailleurs reliés par voie filaire ou non filaire au calculateur du système de commande du giravion hybride et lui transmettent constamment ou cycliquement des données qui peuvent être notamment de type analogique ou numérique.

Par ailleurs, la valeur courante de la masse du giravion hybride peut être calculée à chaque instant en soustrayant à la masse initiale estimée et saisie par l'équipage pour être enregistrée dans le système de commande du giravion, une masse de carburant consommée par le giravion.

En outre, l'objectif de coefficient de portance Czm* du rotor principal peut notamment être identifié dans une table de valeurs définie par des essais en vol, des simulations ou encore par des études aérodynamiques.

De même, la détermination des au moins une première et au moins une seconde consignes $\delta w1$, $\delta w2$ d'angle de braquage est effectuée par exemple à l'aide de coefficients aérodynamiques liés à la portance du ou des volets. Ces coefficients aérodynamiques peuvent être établis de différentes manière telles que des mesures en soufflerie, des programmes informatiques aptes à effectuer des simulations utilisant notamment le principe de la mécanique des fluides ou par des essais en vol.

Par exemple, afin de déterminer les première et seconde consignes $\delta w1$, $\delta w2$ d'angle de braquage des volets, on peut utiliser un premier coefficient de portance $SCz_{\delta w=0}$ de l'aile correspondant à un angle braquage des volets nul. En outre, un tel premier coefficient de portance $SCz_{\delta w=0}$ dépend d'un angle d'incidence alpha entre une corde d'un profil aérodynamique de l'aile et la direction du vent attaquant ce profil aérodynamique.

Les première et seconde consignes $\delta w1$, $\delta w2$ d'angle de braquage des volets peuvent également dépendre d'une efficacité des volets correspondant à une dérivée de la portance définie par l'expression $\dfrac{\partial SCz}{\partial \delta w}$.

Ainsi, un tel coefficient de portance de l'aile peut être calculé selon la formule suivante :

$$SCz = SCz_{\delta w=0} + \frac{\partial SCz}{\partial \delta w} \times \delta w$$

Par suite, connaissant le besoin de portance *SCz,* les première et seconde consignes $\delta w1$, $\delta w2$ d'angle de braquage peuvent être calculées.

Par ailleurs, de tels coefficients aérodynamiques peuvent également être corrigés en fonction de certains paramètres d'interactions entre le rotor principal et chaque demi-aile ou encore entre une hélice propulsive ou tractive et la demi-aile avec laquelle cette hélice propulsive ou tractive est solidarisée.

De manière cyclique ou ponctuellement, le système de commande peut alors générer les au moins une première et au moins une seconde consignes $\delta w1$, $\delta w2$ d'angle de braquage de manière à optimiser automatiquement la performance du giravion hybride.

Avantageusement, on peut ajuster la portance des au moins deux demi-ailes lorsque la condition suivante est remplie :

$$\frac{\text{Frotor} *}{\text{Frotor} * + \text{Faile} *} > S$$

où S est une valeur de seuil prédéterminée représentative d'une contribution minimale admissible du rotor principal à la portance totale du giravion hybride.

En d'autres termes, la valeur de seuil prédéterminée S peut être obtenue à partir de simulations, de calcul ou d'essais en vol.

Une telle valeur de seuil prédéterminée S permet alors de limiter l'angle de braquage du ou des volets et d'éviter que la portance de l'aile soit prépondérante par rapport à celle du rotor principal.

En pratique, on peut ajuster la portance des au moins deux demi-ailes lorsque la ou les premières consignes $\delta w1$ sont strictement inférieures à une première valeur de seuil prédéterminée $\delta wmax1$ représentative d'une déflexion maximale admissible pour le ou les volets gauches et la ou les secondes consignes $\delta w2$ sont strictement inférieures à une seconde valeur de seuil prédéterminée $\delta wmax2$ représentative d'une déflexion maximale admissible pour le ou les volets droits.

En outre, de telles valeurs de seuil prédéterminées $\delta wmax1$ et $\delta wmax2$ sont également obtenues à partir de simulations, de calcul ou d'essais en vol. Elles peuvent être constantes ou variables en fonction de divers paramètres tels que la pression atmosphérique, l'altitude ou encore elles peuvent être paramétrables par un pilote par exemple en fonction du type de mission à réaliser par le giravion hybride.

Selon un exemple de réalisation de l'invention, l'objectif de portance $F_{rotor}*$ du rotor principal peut être calculé au moyen de la formule suivante :

$$\text{Frotor} *= \frac{Czm * \times \rho \times b \times c \times R \times U^2}{6}$$

où p est la masse volumique de l'air extérieur environnant,

b est le nombre de pales de la pluralité de pales du ou des rotors principaux,

c est une corde d'un profil aérodynamique des pales,

R est un rayon du ou des rotors principaux,

U est une vitesse tangentielle en bout des pales.

Par ailleurs, lors d'une phase de vol en autorotation du ou des rotors principaux distincte de la phase de vol nominale, on peut assigner à la ou aux premières consignes $\delta w1$ une première valeur de seuil prédéterminée $\delta wmax1$ représentative d'une déflexion maximale admissible pour le ou les volets gauches et on peut assigner à la ou aux secondes consignes $\delta w2$ une seconde valeur de seuil prédéterminée $\delta wmax2$ représentative d'une déflexion maximale admissible pour le ou les volets droits.

Autrement dit, le ou les volets de chaque demi-ailes peuvent se braquer vers le haut jusqu'à leurs butées. Ainsi, la portance des demi-ailes peut être réduite et la part de la portance générée par le rotor principal devient maximale. On peut ainsi favoriser une phase de vol en autorotation du giravion hybride en maximisant la production de puissance fournie par le rotor principal.

Une telle phase de vol en autorotation peut survenir en cas de panne du ou des moteurs du giravion ou bien être mise en œuvre volontairement par le pilote par exemple lors d'un entrainement au pilotage ou lors d'un test de certification de l'aéronef.

En revanche, si on ne souhaite pas privilégier l'autorotation par le ou les rotors principaux et utiliser plutôt la puissance récupérée par les hélices, alors la loi nominale permettant de commander le ou les volets gauches ou droits peut être respectée. Les hélices permettent alors au giravion hybride de conserver une vitesse d'avancement suffisante pour effectuer une telle phase de vol en autorotation. Les hélices permettent alors au giravion hybride de conserver un régime rotor suffisant en fournissant de la puissance au giravion hybride tel un fonctionnement de type éolien. Le fonctionnement du rotor principal est inchangé par rapport à une phase de vol en croisière et la loi nominale du ou des volets de chaque demi-aile doit être maintenue.

En outre, différents modes de fonctionnement d'un giravion hybride peuvent être mis en œuvre au moyen d'un tel procédé.

Selon un premier mode de fonctionnement, on peut ajuster symétriquement la portance des au moins deux demi-ailes par rapport au plan médian antéropostérieur du fuselage, la ou les premières consignes $\delta w1$ étant égale(s) à la ou aux secondes consignes $\delta w2$.

Dans ce cas, on peut alors mesurer une valeur courante d'une portance du rotor principal et on peut piloter une régulation en boucle fermée pour ajuster symétriquement la portance des au moins deux demi-ailes.

Une telle régulation en boucle fermée permet alors, via un comparateur, de comparer l'objectif de portance $F_{aile}^*$ des au moins deux demi-ailes avec la valeur courante de la portance des au moins deux demi-ailes ou alternativement de comparer l'objectif de portance $F_{rotor}^*$ du rotor principal avec la valeur courante de la portance du rotor principal. Une telle régulation en boucle fermée permet ainsi de réguler la valeur courante de la portance des au moins deux demi-ailes ou celle de la portance du rotor principal.

Selon un second mode de fonctionnement, lorsque d'une part la vitesse air vraie TAS est supérieure à une valeur de seuil prédéterminée TAS1 et d'autre part des paramètres de vol du giravion hybride permettent de vérifier que le giravion hybride est dans une phase de vol stabilisée, on peut ajuster dissymétriquement la portance des au moins deux demi-ailes par rapport au plan médian antéropostérieur du fuselage, la ou les premières consignes $\delta w1$ étant distincte(s) de la ou des secondes consignes $\delta w2$.

Autrement dit, le ou les volets des deux demi-ailes sont orientés avec des positions angulaires différentes lorsque la vitesse air vraie TAS du giravion est suffisante. Une telle valeur de seuil prédéterminée TAS1 peut par exemple être égale à 150 nœuds (kt). Par ailleurs, les paramètres de vol du giravion hybride permettant de définir la phase de vol stabilisée du giravion hybride peuvent être des angles d'assiette minimum et/ou des taux de montée ou de descente réduits. Lors d'une telle phase de vol stabilisée, le giravion hybride ne réalise alors pas de manœuvre.

Une étape de test de l'activation du second mode de fonctionnement peut ainsi être mise en œuvre par le procédé et permet alors de vérifier les deux conditions liées à la vitesse air vraie TAS et aux paramètres de vol du giravion hybride.

Selon une première variante du seconde mode de fonctionnement, on peut ajuster dissymétriquement la portance des au moins deux demi-ailes afin qu'un pas cyclique latéral des pales du rotor principal soit égal à un pas cyclique latéral de consigne.

Autrement dit, cette première variante du seconde mode de fonctionnement permet d'ajuster les au moins deux consignes $\delta w1$, $\delta w2$ d'angle de braquage de manière à optimiser automatiquement un positionnement du manche permettant de commander le pas cyclique latéral des pales du rotor principal. Des capteurs de position agencés sur un tel manche ou sur une ligne de commande permettent alors de mesurer une position courante du manche par rapport à un support solidaire du fuselage du giravion hybride.

Selon une seconde variante du second mode de fonctionnement, on peut ajuster dissymétriquement la portance des au moins deux demi-ailes afin qu'un moment de flexion latérale d'un mât du rotor principal soit égal à un moment de flexion latérale de consigne lors de la phase de vol stabilisée.

Une telle seconde variante du second mode de fonctionnement permet quant à elle d'ajuster les au moins une première et une seconde consignes $\delta w1$, $\delta w2$ d'angle de braquage de manière à optimiser automatiquement les charges sur le mât du rotor principal. Des capteurs agencés sur le mât rotor tels des jauges de contrainte permettent alors de mesurer ou d'estimer ce moment de flexion latérale du mât du rotor principal.

En pratique, on peut ajuster dissymétriquement la portance des au moins deux demi-ailes en cas de dysfonctionnement de l'un des au moins un volet gauche et au moins un volet droit.

Dans ce cas, le ou les volets gauches ou droits toujours actifs peuvent automatiquement se braquer pour permettre de satisfaire l'objectif de portance $F_{aile}^*$ des au moins deux demi-ailes ou bien pour limiter le moment de flexion latérale lors de la phase de vol stabilisée.

L'invention se rapporte également à un giravion hybride comportant :

- un fuselage,

- au moins un rotor principal muni d'une pluralité de pales, le ou les rotors principaux tournant par rapport au fuselage à une vitesse de rotation NR,

- au moins une hélice propulsive ou tractive,

- au moins deux demi-ailes positionnées de part et d'autre d'un plan médian antéropostérieur du fuselage, les au moins deux demi-ailes comportant d'une part au moins une demi-aile gauche comportant une structure fixe gauche solidarisée au fuselage et au moins un volet gauche mobile par rapport à la structure fixe gauche et d'autre part au moins une demi-aile droite comportant une structure fixe droite solidarisée au fuselage et au moins un volet droit mobile par rapport à la structure fixe droite, et

- un système de commande relié à un ou aux volets gauches et à un ou aux volets droits, le système de commande étant configuré pour générer automatiquement au moins une première consigne $\delta w1$ d'angle de braquage du ou des volets gauches par rapport la structure fixe gauche et au moins une seconde consigne $\delta w2$ d'angle de braquage du ou des volets droits par rapport la structure fixe droite.

Selon l'invention, un tel giravion hybride est remarquable en ce que le système de commande est configuré pour appliquer le procédé précité.

L'invention et ses avantages apparaîtront avec plus de détails dans le cadre de la description qui suit avec des exemples donnés à titre illustratif en référence aux figures annexées qui représentent :

[Fig 1] la figure 1, une vue en perspective d'un giravion hybride conforme à l'invention,

[Fig 2] la figure 2, un schéma de principe illustrant un procédé d'ajustement automatique d'une portance d'un giravion hybride, conformément à l'invention

[Fig 3] la figure 3, un premier logigramme illustrant un premier mode de fonctionnement du procédé, conformément à l'invention,

[Fig 4] la figure 4, un second logigramme illustrant un second mode de fonctionnement du procédé, conformément à l'invention, et

[Fig 5] la figure 5, un schéma d'un système de commande conformément à l'invention.

Les éléments présents dans plusieurs figures distinctes sont affectés d'une seule et même référence.

Comme déjà évoqué l'invention se rapporte au domaine des giravions hybrides configurés pour voler des vitesses de croisière élevées.

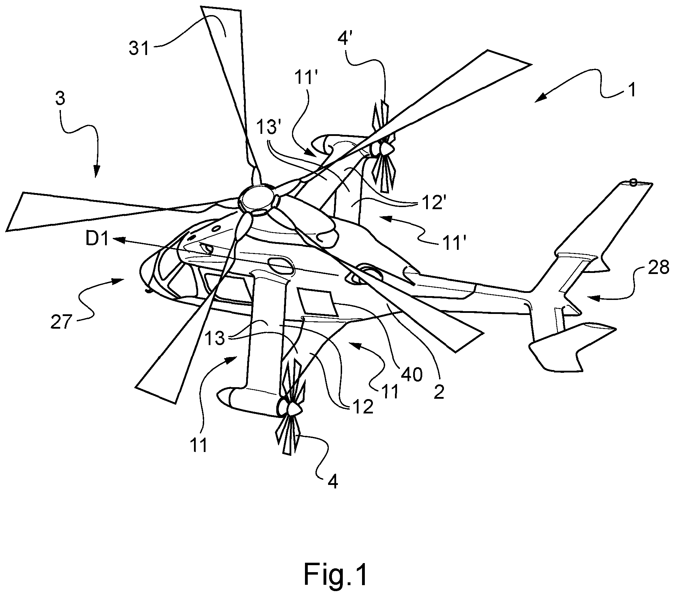

Tel que représenté à la figure 1, un tel giravion hybride 1 comporte classiquement un fuselage 2, au moins un rotor principal 3 muni d'une pluralité de pales 31, au moins une hélice 4, 4' propulsive ou tractive et au moins deux demi-ailes 11, 11' positionnées de part et d'autre d'un plan médian antéropostérieur du fuselage 2. En outre, le rotor principal 3 est configuré pour être entraîné en rotation par au moins une installation motrice. Ce rotor principal 3 peut alors tourner par rapport au fuselage 2 à une vitesse de rotation NR pour participer au moins à la sustentation, voire à la propulsion, du giravion hybride 1.

Tel que représenté, le giravion hybride 1 peut comporter deux hélices 4, 4' agencées respectivement chacune sur une demi-aile 11, 11' au niveau d'une extrémité libre des au moins deux demi-ailes 11, 11'. De plus, le giravion hybride 1 peut comporter deux paires de demi-ailes 11, 11'.

Une première paire de demi-ailes gauches 11 est alors agencée au niveau d'un côté gauche du plan médian antéropostérieur du fuselage 2 et une deuxième paire de demi-ailes droites 11' est quant à elle agencée au niveau d'un côté droit du plan médian antéropostérieur du fuselage 2. Le côté gauche ou droit est alors défini par rapport au regard d'un pilote du giravion hybride 1 assis à son poste de pilotage et regardant droit devant lui vers une zone avant du giravion hybride 1. De plus, une direction d'avancement D1 peut également être représentée et définie selon une direction orientée depuis une zone arrière 28 du giravion hybride 1 vers une zone avant 27 du giravion hybride 1.

En outre, chaque demi-aile gauche 11 comporte notamment une structure fixe gauche 13 solidarisée au fuselage 2 et au moins un volet gauche 12 mobile par rapport à la structure fixe gauche 13. De même, chaque demi-aile droite 11' comporte une structure fixe droite 13' solidarisée au fuselage 2 et au moins un volet droit 12' mobile par rapport à la structure fixe droite 13'.

Telle que représentée, chaque demi-aile gauche 11 ou chaque demi-aile droite 11' peut présenter en section un profil aérodynamique et le ou les volets gauches 12 et le ou les volets droits 12' peuvent être avantageusement agencés au niveau d'un bord de fuite de ce profil aérodynamique.

Par ailleurs, un tel giravion hybride 1 comporte un système de commande 40 relié à un ou aux volets gauches 12 de chaque demi-aile gauche 11 et à un ou aux volets droits 12' de chaque demi-aile droite 11'.

Un tel système de commande 40 est configuré pour générer automatiquement au moins une première et au moins une seconde consignes $\delta w1$, $\delta w2$ d'angle de braquage de chaque volet gauche 12 par rapport une structure fixe gauche 13 en regard et de chaque volet droit 12' par rapport une structure fixe droite 13' en regard. Le système de commande 40 permet alors d'appliquer cette ou ces premières consignes $\delta w1$ d'angle de braquage et cette ou ces secondes consignes $\delta w2$ d'angle de braquage.

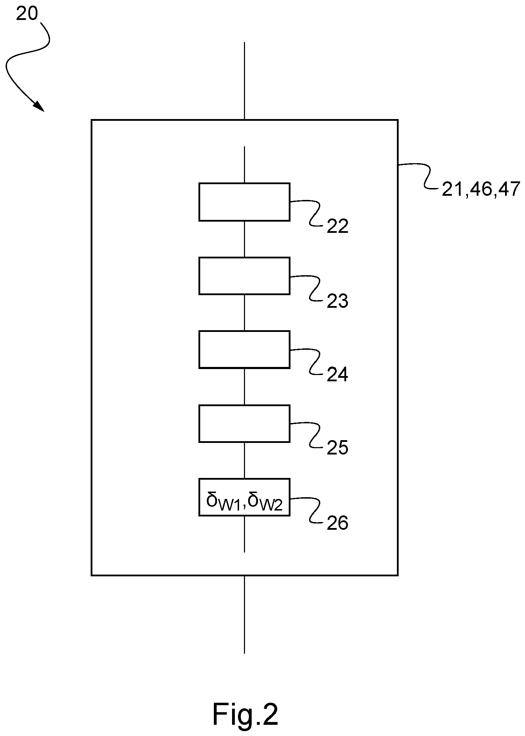

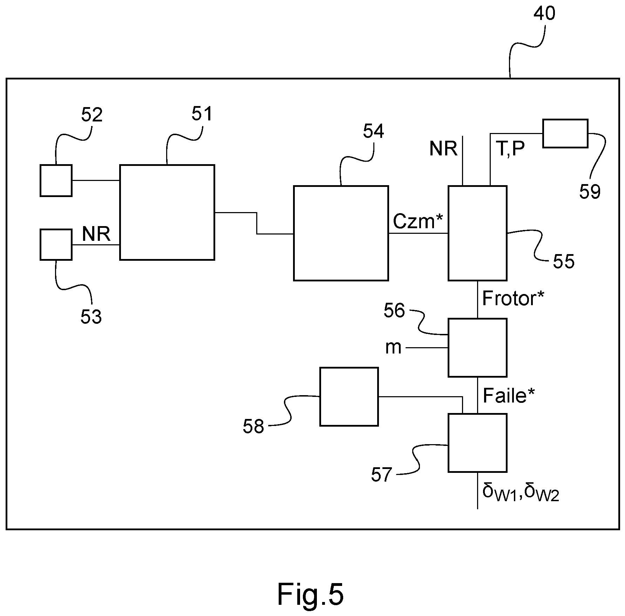

En outre, un tel système de commande 40 est représenté plus en détail à la figure 5 et est configuré pour appliquer le procédé 20 tel que représenté schématiquement à la figure 2.

Un tel procédé 20 comporte ainsi une étape 21, 46, 47 consistant à ajuster automatiquement une portance des au moins deux demi-ailes 11, 11' en faisant varier l'orientation angulaire du ou des volets gauches 12 par rapport la structure fixe gauche 13 et l'orientation angulaire du ou des volets droits 12' par rapport la structure fixe droite 13'. Pour mettre en œuvre cet ajustement automatiquement de la portance, cette étape 21, 46, 47 comporte notamment une sous étape de calcul 22 avec un premier calculateur 51 du système de commande 40 d'un paramètre d'avancement fonction d'une part d'une vitesse air vraie TAS du giravion hybride 1 mesurée par un premier capteur de vitesse 52 et d'autre part d'une valeur courante de la vitesse de rotation NR du rotor principal 3 mesurée par un second capteur 53.

L'étape 21, 46, 47 comporte ensuite une sous étape 23 de détermination avec un second calculateur 54 d'un objectif de coefficient de portance Czm* du rotor principal 3. Un tel objectif de coefficient de portance Czm* est alors fonction du paramètre d'avancement précédemment calculé à la sous étape de calcul 22.

L'étape 21, 46, 47 comporte alors une sous étape 24 de calcul d'un objectif de portance $F_{rotor}$* du rotor principal 3 par un troisième calculateur 55 du système de commande 40. Un tel objectif de portance $F_{rotor}$* est quant à lui fonction de la valeur courante de la vitesse de rotation NR, de conditions atmosphériques courantes, telles que par exemple la pression P et la température T de l'air, et de l'objectif de coefficient de portance Czm* calculé lors de la sous étape 23 par le second calculateur 54. Ainsi, un ou plusieurs capteurs 59 sensibles aux conditions atmosphériques sont alors reliés au troisième calculateur 55 pour transmettre des mesures des valeurs courantes relatives à des conditions atmosphériques.

L'étape 21, 46, 47 comporte également une sous étape 25 de calcul d'un objectif de portance $F_{aile}^{*}$ des au moins deux demi-ailes 11, 11' par un quatrième calculateur 46 du système de commande 40. Un tel objectif de portance $F_{aile}^{*}$ est quant à lui fonction de l'objectif de portance $F_{rotor}^{*}$ calculé lors de la sous étape 24 et d'une valeur courante d'une masse du giravion hybride 1.

Au surplus, l'étape 21, 46, 47 comporte une sous étape 26 de détermination d'au moins une première consigne $\delta w1$ d'angle de braquage de chacun des au moins un volet gauche 12 par rapport à la structure fixe gauche 13 et d'au moins une seconde consigne $\delta w2$ d'angle de braquage de chacun des au moins un volet droit 12' par rapport à la structure fixe gauche 13'. Ces au moins deux consignes $\delta w1$, $\delta w2$ d'angle de braquage sont alors déterminées par un cinquième calculateur 47 en fonction de l'objectif de portance $F_{aile}^{*}$ calculé lors de la sous étape 26 et de coefficients aérodynamiques des au moins deux demi-ailes 11, 11'.

Ces coefficients aérodynamiques peuvent être établis de différentes manière telles que des mesures en soufflerie, des programmes informatiques aptes à effectuer des simulations utilisant notamment le principe de la mécanique des fluides ou par des essais en vol.

Par ailleurs, de tels coefficients aérodynamiques peuvent alors être stockés dans une mémoire 48 et peuvent également être corrigés en fonction de certains paramètres d'interactions entre le rotor principal 3 et chaque demi-aile 11, 11' ou encore entre une hélice propulsive ou tractive 4, 4' et la demi-aile 11, 11' avec laquelle cette hélice propulsive ou tractive 4, 4' est solidarisée.

En outre, les différents calculateurs 41, 44, 45, 46 et 47 peuvent, tels que représentés à la figure 5, être disjoints les un des autres ou encore être formés par un même calculateur. Ce ou ces calculateurs 41, 44, 45, 46 et 47 peuvent comprendre par exemple au moins un processeur et au moins une mémoire, au moins un circuit intégré, au moins un système programmable, au moins un circuit logique, ces exemples ne limitant pas la portée donnée à l'expression calculateur. Le terme processeur peut désigner aussi bien une unité centrale de traitement connue sous l'acronyme CPU, une unité graphique de traitement GPU, une unité digitale connue sous l'acronyme DSP, un microcontrôleur...

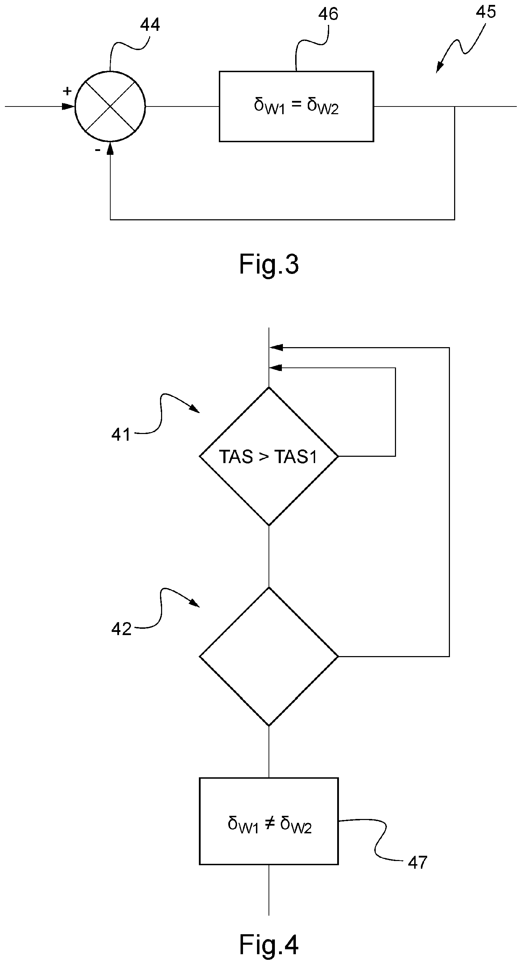

En outre telle que représentée à la figure 3 selon un premier mode de fonctionnement du procédé 20, l'étape 46 peut permettre d'ajuster symétriquement la portance des au moins deux demi-ailes 11, 11' par rapport au plan médian antéropostérieur du fuselage 2.

Dans ce cas, la ou les premières consignes $\delta w1$ d'angle de braquage du ou des volets gauches 12 sont alors égales à la ou aux secondes consignes $\delta w2$ d'angle de braquage du ou des volets droits 12'.

On peut alors mesurer une valeur courante d'une portance du rotor principal 3 et le système de commande 40 peut piloter une régulation en boucle fermée 45 pour ajuster symétriquement la portance des au moins deux demi-ailes 11, 11'.

En outre, la valeur courante de la portance des au moins deux demi-ailes 11, 11' peut être calculée à partir de la mesure de la valeur courante d'une portance du rotor principal 3 puis en soustrayant le poids du giravion hybride à cette valeur courante d'une portance du rotor principal 3.

En entrée, un comparateur 44 permet alors de comparer une consigne de portance par exemple des au moins deux demi-ailes 11, 11' avec une valeur courante de la portance des au moins deux demi-ailes 11, 11'.

Alternativement et selon un deuxième mode de fonctionnement du procédé 20, l'étape 47 peut permettre d'ajuster dissymétriquement la portance des au moins deux demi-ailes 11, 11' par rapport au plan médian antéropostérieur du fuselage 2. Dans ce cas, les au moins deux consignes $\delta w1$, $\delta w2$ d'angle de braquage sont donc distinctes l'une de l'autre.

Dans ce cas, un test d'activation peut être réalisé avec des étapes de comparaison 41 et 42.

Ainsi, une première étape de comparaison 41 permet de comparer la vitesse air vraie TAS du giravion hybride 1 par rapport à une valeur de seuil prédéterminée TAS1. Lorsque la vitesse air vraie TAS est supérieure à cette valeur de seuil prédéterminée TAS1 alors le système de commande 40 teste ensuite des paramètres de vol du giravion hybride 1.

Dés lors, une seconde étape de comparaison 42 permet quant à elle de vérifier que le giravion hybride 1 est dans une phase de vol stabilisée en comparant ces paramètres de vol du giravion hybride 1 avec des valeurs mémorisées représentatives par exemple des assiettes et des taux de montée ou de descente du giravion hybride 1. Ces paramètres de vol du giravion hybride 1 sont alors mesurés en temps réel par exemple par des capteurs tels des inclinomètres ou des accéléromètres montés sur le giravion hybride 1. Ces paramètres de vol peuvent en outre être obtenus au moyen d'un système connu sous l'acronyme AHRS et se rapportant à l'expression en langue anglaise « Attitude and Heading Reference System ». Un tel système peut en effet équiper un giravion hybride et comporter trois accéléromètres permettant de mesurer des accélérations longitudinales, trois gyromètres permettant de mesurer des accélérations angulaires ainsi qu'une vanne de flux triaxe permettant de mesurer des références de cap.

Lorsque les deux étapes de comparaison 41 et 42 sont vérifiées positivement, le test d'activation est validé et l'étape 47 peut alors être mise en œuvre pour ajuster dissymétriquement la portance des au moins deux demi-ailes 11, 11'.

En outre, une telle étape 47 peut être mise en œuvre dans différents cas et par exemple pour qu'un pas cyclique latéral des pales 31 du rotor principal 3 soit égal à un pas cyclique latéral de consigne, qu'un moment de flexion latérale d'un mât du rotor principal 3 soit égal à un moment de flexion latérale de consigne lors de la phase de vol stabilisée et/ou en cas de dysfonctionnement de l'un des au moins un volet gauche 12 et au moins un volet droit 12'.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par les revendications affichées.

## Revendications

1. Procédé (20) d'ajustement automatique d'une portance d'un giravion hybride (1), ledit giravion hybride (1) comportant :

   - un fuselage (2),
   - au moins un rotor principal (3) muni d'une pluralité de pales (31), ledit au moins un rotor principal (3) tournant par rapport audit fuselage (2) à une vitesse de rotation NR,
   - au moins une hélice (4, 4') propulsive ou tractive, et
   - au moins deux demi-ailes (11, 11') positionnées de part et d'autre d'un plan médian antéropostérieur dudit fuselage (2), lesdites au moins deux demi-ailes (11, 11') comportant d'une part au moins une demi-aile gauche (11) comportant une structure fixe gauche (13) solidarisée audit fuselage (2) et au moins un volet gauche (12) mobile par rapport à ladite structure fixe gauche (13) et d'autre part au moins une demi-aile droite (11') comportant une structure fixe droite (13') solidarisée audit fuselage (2) et au moins un volet droit (12') mobile par rapport à ladite structure fixe droite (13'),

   ledit procédé (20) comportant, lors d'une phase de vol nominale, une étape (21, 46, 47) consistant à ajuster automatiquement une portance desdites au moins deux demi-ailes (11, 11'),
   ledit procédé (20) étant **caractérisé en ce que** ladite étape (21, 46, 47) comporte une succession de sous étapes au cours desquelles :

   - on calcule (22) un paramètre d'avancement fonction d'une part d'une vitesse air vraie TAS et d'autre part d'une valeur courante de ladite vitesse de rotation NR,
   - on détermine (23) un objectif de coefficient de portance Czm* dudit rotor principal (3), ledit objectif de coefficient de portance Czm* étant fonction dudit paramètre d'avancement,
   - on calcule (24) un objectif de portance $F_{rotor}$* dudit rotor principal (3), ledit objectif de portance $F_{rotor}$* dudit rotor principal (3) étant fonction de ladite valeur courante de ladite vitesse de rotation NR, de conditions atmosphériques courantes et dudit objectif de coefficient de portance Czm*,
   - on calcule (25) un objectif de portance $F_{aile}$* desdites au moins deux demi-ailes (11, 11'), ledit objectif de portance $F_{aile}$* desdites au moins deux demi-ailes (11, 11') étant fonction dudit objectif de portance $F_{rotor}$* dudit rotor principal (3) et d'une valeur courante d'une masse dudit giravion hybride (1),
   - on détermine (26) au moins une première consigne δw1 d'angle de braquage dudit au moins un volet gauche (12) par rapport ladite structure fixe gauche (13) et au moins une seconde consigne δw2 d'angle de braquage dudit au moins un volet droit (12') par rapport ladite structure fixe droite (13'), lesdites au moins une première et au moins une seconde consignes δw1, δw2 d'angle de braquage étant fonctions dudit objectif de portance $F_{aile}$* desdites au moins deux demi-ailes (11, 11') et de coefficients aérodynamiques desdites au moins deux demi-ailes (11, 11').

2. Procédé selon la revendication 1,
   **caractérisé en ce que** l'on ajuste ladite portance desdites au moins deux demi-ailes (11, 11') lorsque la condition suivante est remplie :

$$\frac{Frotor*}{Frotor* + Faile*} > S$$

   où S est une valeur de seuil prédéterminée représentative d'une contribution minimale admissible dudit rotor principal (3) à la portance totale dudit giravion hybride (1).

3. Procédé selon l'une quelconque des revendications 1 à 2,
   **caractérisé en ce que** l'on ajuste ladite portance desdites au moins deux demi-ailes (11, 11') lorsque ladite au moins une première consigne δw1 est strictement inférieure à une première valeur de seuil prédéterminée δwmax1 représentative d'une déflexion maximale admissible pour ledit au moins un volet gauche (12) et ladite au moins une seconde consigne δw2 est strictement inférieure à une seconde valeur de seuil prédéterminée δwmax2 représentative d'une déflexion maximale admissible pour ledit au moins un volet droit (12').

4. Procédé selon l'une quelconque des revendications 1 à 3,
   **caractérisé en ce que** ledit objectif de portance

$F_{rotor}*$ dudit rotor principal (3) est calculé au moyen de la formule suivante :

$$Frotor* = \frac{Czm* \times \rho \times b \times c \times R \times U^2}{6}$$

où p est la masse volumique de l'air extérieur environnant,

b est le nombre de pales de ladite pluralité de pales (31) dudit au moins un rotor principal (3),

c est une corde d'un profil aérodynamique desdites pales (31),

R est un rayon dudit au moins un rotor principal (3),

U est une vitesse tangentielle en bout desdites pales (31).

5. Procédé selon l'une quelconque des revendications 1 à 4,
**caractérisé en ce que**, lors d'une phase de vol en autorotation dudit au moins un rotor principal (3) distincte de ladite phase de vol nominale, on assigne à ladite au moins une première consigne δw1 une première valeur de seuil prédéterminée δwmax1 représentative d'une déflexion maximale admissible pour ledit au moins un volet gauche (12) et on assigne à ladite au moins une seconde consigne δw2 une seconde valeur de seuil prédéterminée δwmax2 représentative d'une déflexion maximale admissible pour ledit au moins un volet droit (12').

6. Procédé selon l'une quelconque des revendications 1 à 5,
**caractérisé en ce que** l'on ajuste symétriquement (46) ladite portance desdites au moins deux demi-ailes (11, 11') par rapport audit plan médian antéropostérieur dudit fuselage (2), ladite au moins une première consigne δw1 étant égale à ladite au moins une seconde consigne δw2.

7. Procédé selon la revendication 6,
**caractérisé en ce qu'**on mesure une valeur courante d'une portance dudit rotor principal (3) et on pilote une régulation en boucle fermée (45) pour ajuster symétriquement ladite portance desdites au moins deux demi-ailes (11, 11').

8. Procédé selon l'une quelconque des revendications 1 à 5,
**caractérisé en ce que**, lorsque d'une part ladite vitesse air vraie TAS est supérieure à une valeur de seuil prédéterminée TAS1 et d'autre part des paramètres de vol dudit giravion hybride (1) permettent de vérifier que ledit giravion hybride (1) est dans une phase de vol stabilisée, on ajuste dissymétriquement (47) ladite portance desdites au moins deux demi-ailes (11, 11') par rapport audit plan médian antéropostérieur dudit fuselage (2), ladite au moins une première consigne δw1 étant distincte de ladite au moins une seconde consigne δw2.

9. Procédé selon la revendication 8,
**caractérisé en ce que** l'on ajuste dissymétriquement (47) ladite portance desdites au moins deux demi-ailes (11, 11') afin qu'un pas cyclique latéral desdites pales (31) dudit rotor principal (3) soit égal à un pas cyclique latéral de consigne.

10. Procédé selon la revendication 8,
**caractérisé en ce que** l'on ajuste dissymétriquement (47) ladite portance desdites au moins deux demi-ailes (11, 11') afin qu'un moment de flexion latérale d'un mât dudit rotor principal (3) soit égal à un moment de flexion latérale de consigne lors de ladite phase de vol stabilisée.

11. Procédé selon l'une quelconque des revendications 8 à 10,
**caractérisé en ce que** l'on ajuste dissymétriquement (47) ladite portance desdites au moins deux demi-ailes (11, 11') en cas de dysfonctionnement de l'un desdits au moins un volet gauche (12) et au moins un volet droit (12').

12. Giravion hybride (1) comportant :

- un fuselage (2),
- au moins un rotor principal (3) muni d'une pluralité de pales (31), ledit au moins un rotor principal (3) tournant par rapport audit fuselage (2) à une vitesse de rotation NR,
- au moins une hélice (4, 4') propulsive ou tractive,
- au moins deux demi-ailes (11, 11') positionnées de part et d'autre d'un plan médian antéropostérieur dudit fuselage (2), lesdites au moins deux demi-ailes (11, 11') comportant d'une part au moins une demi-aile gauche (11) comportant une structure fixe gauche (13) solidarisée audit fuselage (2) et au moins un volet gauche (12) mobile par rapport à ladite structure fixe gauche (13) et d'autre part au moins une demi-aile droite (11') comportant une structure fixe droite (13') solidarisée audit fuselage (2) et au moins un volet droit (12') mobile par rapport à ladite structure fixe droite (13'), et
- un système de commande (40) relié audit au moins un volet gauche (12) et audit au moins un volet droit (12'), ledit système de commande (40) étant configuré pour générer automatiquement au moins une première consigne δw1 d'angle de braquage dudit au moins un volet gauche (12) par rapport ladite structure fixe gauche (13) et au moins une seconde consigne δw2 d'angle de braquage dudit au moins un volet droit (12') par rapport ladite structure fixe droite (13')

**caractérisé en ce que** ledit système de commande (40) est configuré pour appliquer ledit procédé (20) selon l'une quelconque des revendications 1 à 11.

## Patentansprüche

1. Verfahren (20) zum automatischen Regulieren eines Auftriebs eines Hybrid-Drehflügelflugzeugs (1), wobei das Hybrid-Drehflügelflugzeug (1) umfasst :

   - einen Rumpf (2),
   - mindestens einen Hauptrotor (3) mit einer Mehrzahl von Blättern (31), wobei sich der mindestens eine Hauptrotor (3) in Bezug auf den Rumpf (2) mit einer Drehzahl NR dreht,
   - mindestens einen antreibenden oder ziehenden Propeller (4, 4'), und
   - mindestens zwei Flügelhälften (11, 11'), die auf beiden Seiten einer anteroposterioren Mittelebene des Rumpfes (2) positioniert sind, wobei die mindestens zwei Flügelhälften (11, 11') einerseits mindestens eine linke Flügelhälfte (11) mit einer linken festen Struktur (13), die fest mit dem Rumpf (2) verbunden ist, und mindestens einer linken Klappe (12), die in Bezug auf die linke feste Struktur (13) beweglich ist, und andererseits mindestens eine rechte Flügelhälfte (11') mit einer rechten festen Struktur (13'), die fest mit dem Rumpf (2) verbunden ist, und mindestens einer rechten Klappe (12'), die in Bezug auf die rechte feste Struktur (13') beweglich ist, umfassen,

      wobei das Verfahren (20) während einer nominalen Flugphase einen Schritt (21, 46, 47) des automatischen Regulierens eines Auftriebs der mindestens zwei Flügelhälften (11, 11') umfasst,
      wobei das Verfahren (20) **dadurch gekennzeichnet ist, dass** der Schritt (21, 46, 47) eine Folge von Teilschritten umfasst, in deren Verlauf:

      - ein Vorschubparameter berechnet wird (22), der einerseits von einer wahren Luftgeschwindigkeit TAS und andererseits von einem aktuellen Wert der Drehzahl NR abhängt,
      - ein Ziel-Auftriebskoeffizient Czm* des Hauptrotors (3) bestimmt wird (23), wobei der Soll-Auftriebskoeffizient Czm* eine Funktion des Vorschubparameters ist,
      - ein Ziel-Auftrieb $F_{rotor}$* des Hauptrotors (3) berechnet wird (24), wobei der

Soll-Auftrieb $F_{rotor}$* des Hauptrotors (3) eine Funktion des aktuellen Werts der Drehzahl NR, der aktuellen atmosphärischen Bedingungen und des Soll-Auftriebskoeffizienten Czm* ist,

   - ein Ziel-Auftrieb $F_{aile}$* der mindestens zwei Flügelhälften (11, 11') berechnet wird (25), wobei der Ziel-Auftrieb $F_{aile}$* der mindestens zwei Flügelhälften (11, 11') eine Funktion des Ziel-Auftriebs $F_{rotor}$* des Hauptrotors (3) und eines aktuellen Werts einer Masse des Hybrid-Drehflügelflugzeugs (1) ist,
   - mindestens ein erster Sollwert δw1 des Einschlagwinkels der mindestens einen linken Klappe (12) in Bezug auf die linke feste Struktur (13) und mindestens ein zweiter Sollwert δw2 des Einschlagwinkels der mindestens einen rechten Klappe (12') in Bezug auf die rechte feste Struktur (13') bestimmt wird (26), wobei der mindestens eine erste und der mindestens eine zweite Sollwert δw1, δw2 des Einschlagwinkels Funktionen des Ziel-Auftriebs $F_{aire}$* der mindestens zwei Flügelhälften (11, 11') und der aerodynamischen Koeffizienten der mindestens zwei Flügelhälften (11, 11') sind.

2. Verfahren nach Anspruch 1,
   **dadurch gekennzeichnet, dass** der Auftrieb der mindestens zwei Flügelhälften (11, 11') reguliert wird, wenn die folgende Bedingung erfüllt ist:

$$\frac{Frotor*}{Frotor* + Faile*} > S \quad ,$$

wobei S ein vorgegebener Schwellenwert ist, der für einen minimal zulässigen Beitrag des Hauptrotors (3) zum Gesamtauftrieb des Hybrid-Drehflügelflugzeugs (1) repräsentativ ist.

3. Verfahren nach einem der Ansprüche 1 bis 2,
   **dadurch gekennzeichnet, dass** der Auftrieb der mindestens zwei Flügelhälften (11, 11') reguliert wird, wenn der mindestens eine erste Sollwert δw1 strikt kleiner ist als ein erster vorgegebener Schwellenwert δwmax1, der für eine maximal zulässige Auslenkung für die mindestens eine linke Klappe (12) repräsentativ ist, und der mindestens eine zweite Sollwert 5w2 strikt kleiner ist als ein zweiter vorgegebener Schwellenwert δwmax2, der für eine maximal zulässige Auslenkung für die mindestens eine rechte Klappe (12') repräsentativ ist.

4. Verfahren nach einem der Ansprüche 1 bis 3, **dadurch gekennzeichnet, dass** der Ziel-Auftrieb $F_{rotor}$* des Hauptrotors (3) mit Hilfe der folgenden Formel berechnet wird:

$$Frotor* = \frac{Czm* \times \rho \times b \times c \times R \times U^2}{6},$$

wobei $\rho$ die Dichte der umgebenden Außenluft ist,

b die Blattzahl der mehreren Blätter (31) des mindestens einen Hauptrotors (3) ist,

c eine Sehne eines aerodynamischen Profils der Blätter (31) ist,

R ein Radius des mindestens einen Hauptrotors (3) ist,

U eine Tangentialgeschwindigkeit an der Spitze der Blätter (31) ist.

5. Verfahren nach einem der Ansprüche 1 bis 4, **dadurch gekennzeichnet, dass** während einer von der nominalen Flugphase verschiedenen Autorotationsflugphase des mindestens einen Hauptrotors (3) dem mindestens einen ersten Sollwert $\delta w1$ ein erster vorgegebener Schwellenwert $\delta wmax1$ zugewiesen wird, der für eine maximal zulässige Auslenkung für die mindestens eine linke Klappe (12) repräsentativ ist, und dem mindestens einen zweiten Sollwert $\delta w2$ ein zweiter vorgegebener Schwellenwert $\delta wmax2$ zugewiesen wird, der für eine maximal zulässige Auslenkung für die mindestens eine rechte Klappe (12') repräsentativ ist.

6. Verfahren nach einem der Ansprüche 1 bis 5, **dadurch gekennzeichnet, dass** der Auftrieb der mindestens zwei Flügelhälften (11, 11') in Bezug auf die anteroposteriore Mittelebene des Rumpfes (2) symmetrisch reguliert (46) wird, wobei der mindestens eine erste Sollwert $\delta w1$ gleich dem mindestens einen zweiten Sollwert $\delta w2$ ist.

7. Verfahren nach Anspruch 6, **dadurch gekennzeichnet, dass** ein aktueller Wert eines Auftriebs des Hauptrotors (3) gemessen wird und eine Regulierung mit geschlossenem Regelkreis (45) gesteuert wird, um den Auftrieb der mindestens zwei Flügelhälften (11, 11') symmetrisch zu regulieren.

8. Verfahren nach einem der Ansprüche 1 bis 5, **dadurch gekennzeichnet, dass**, wenn einerseits die wahre Luftgeschwindigkeit TAS größer als ein vorgegebener Schwellenwert TAS1 ist und andererseits Flugparameter des Hybrid-Drehflügelflugzeugs (1) es ermöglichen, zu verifizieren, dass sich das Hybrid-Drehflügelflugzeug (1) in einer stabilisierten Flugphase befindet, der Auftrieb der mindestens zwei Flügelhälften (11, 11') in Bezug auf die anteroposteriore Mittelebene des Rumpfes (2) asymmetrisch reguliert wird (47), indem sich der mindestens eine erste Sollwert $\delta w1$ von dem mindestens einen zweiten Sollwert $\delta w2$ unterscheidet.

9. Verfahren nach Anspruch 8, **dadurch gekennzeichnet, dass** der Auftrieb der mindestens zwei Flügelhälften (11, 11') asymmetrisch reguliert wird (47), so dass eine zyklische Anstellwinkelverstellung der Blätter (31) des Hauptrotors (3) gleich einem Sollwert der zyklischen Anstellwinkelverstellung ist.

10. Verfahren nach Anspruch 8, **dadurch gekennzeichnet, dass** während der stabilisierten Flugphase der Auftrieb der mindestens zwei Flügelhälften (11, 11') unsymmetrisch so reguliert (47) wird, dass ein Seitenbiegemoment eines Mastes des Hauptrotors (3) gleich einem Soll-Seitenbiegemoment ist.

11. Verfahren nach einem der Ansprüche 8 bis 10, **dadurch gekennzeichnet, dass** im Falle einer Störung einer der mindestens einen linken Klappe (12) und der mindestens einen rechten Klappe (12') der Auftrieb der mindestens zwei Flügelhälften (11, 11') asymmetrisch reguliert (47) wird.

12. Hybrid-Drehflügelflugzeug (1) mit :

    - einem Rumpf (2),

    - mindestens einem Hauptrotor (3) mit einer Mehrzahl von Blättern (31), wobei sich der mindestens eine Hauptrotor (3) in Bezug auf den Rumpf (2) mit einer Drehzahl NR dreht,

    - mindestens einem antreibenden oder ziehenden Propeller (4, 4'),

    - mindestens zwei Halbflügeln (11, 11'), die auf beiden Seiten einer anteroposterioren Mittelebene des Rumpfes (2) positioniert sind, wobei die mindestens zwei Halbflügel (11, 11') einerseits mindestens eine linke Flügelhälfte (11) mit einer linken festen Struktur (13), die fest mit dem Rumpf (2) verbunden ist, und mindestens einer linken Klappe (12), die in Bezug auf die linke feste Struktur (13) beweglich ist, und andererseits mindestens eine rechte Flügelhälfte (11') mit einer rechten festen Struktur (13'), die fest mit dem Rumpf (2) verbunden ist, und mindestens einer rechten Klappe (12'), die in Bezug auf die rechte feste Struktur (13') beweglich ist, umfassen, und

    - einem Steuersystem (40), das mit der mindestens einen linken Klappe (12) und der mindestens einen rechten Klappe (12') verbunden ist, wobei das Steuersystem (40) konfiguriert ist, um automatisch mindestens einen ersten Sollwert δw1 des Einschlagwinkels der mindestens einen linken Klappe (12) in Bezug auf die linke feste Struktur (13) und mindestens einen zweiten Sollwert δw2 des Einschlagwinkels der mindestens einen rechten Klappe (12') in Bezug auf die rechte feste Struktur (13') zu erzeugen,

**dadurch gekennzeichnet, dass** das Steuersystem (40) konfiguriert ist, um das Verfahren (20) nach einem der Ansprüche 1 bis 11 anzuwenden.

**Claims**

1. Method (20) for automatically adjusting the lift of a hybrid rotorcraft (1), the hybrid rotorcraft (1) including:

   - a fuselage (2),
   - at least one principal rotor (3) equipped with a plurality of blades (31), the at least one principal rotor (3) turning in relation to the fuselage (2) at a rotation speed NR,
   - at least one propulsive or tractive propeller (4, 4'), and
   - at least two wing-halves (11, 11') positioned on either side of an anteroposterior median plane of the fuselage (2), the at least two wing-halves (11, 11') including on one hand at least a left wing-half (11) containing a fixed left structure (13) secured to the fuselage (2) and at least one left flap (12) mobile in relation to the fixed left structure (13) and on the other hand at least one right wing-half (11') containing a fixed right structure (13') secured to the fuselage (2) and at least a right flap (12') mobile in relation to the fixed right structure (13'),

   the method (20) including, during a nominal flight phase, a stage (21, 46, 47) involving automatic adjustment of the lift of the at least two wing-halves (11, 11'), the method (20) being **characterised in that** the stage (21, 46, 47) includes a series of substages during which:

   - an advance ratio is calculated (22) depending on one hand on a true air speed TAS and on the other hand on a current value of the rotation speed NR,
   - a lift coefficient objective Czm* is determined (23) for the principal rotor (3), the lift coefficient reference Czm* being dependent on the advance ratio,
   - a lift objective $F_{rotor}$* is calculated (24) for the principal rotor (3), the lift objective $F_{rotor}$* for the principal rotor (3) being dependent on the current value of the rotation speed NR, the current weather conditions and the lift coefficient objective Czm*,
   - a lift objective $F_{wing}$* is calculated (25) for the at least two wing-halves (11, 11'), the lift objective $F_{wing}$* for the at least two wing-halves (11, 11') being dependent on the lift objective $F_{rotor}$* for the principal rotor (3) and on a current value of a mass for the hybrid rotorcraft (1),
   - at least one first set steering angle δw1 is determined (26) for the at least one left flap (12) in relation to the fixed left structure (13) and at least one second set steering angle δw2 for the at least one right flap (12') in relation to the fixed right structure (13'), the at least one first and second set steering angle δw1, δw2 being functions of the lift objective $F_{wing}$* of the at least two wing-halves (11, 11') and of aerodynamic coefficients of the at least two wing-halves (11, 11').

2. Method according to Claim 1, **characterised in that** the lift of the at least two wing-halves (11, 11') is adjusted when the following condition is fulfilled:

$$\frac{Frotor*}{Frotor* + F_{wing}*} > S$$

   where S is a predetermined threshold value representing a minimum admissible contribution from the principal rotor (3) to the total lift of the hybrid rotorcraft (1).

3. Method according to any of Claims 1-2, **characterised in that** the lift of the at least two wing-halves (11, 11') is adjusted when the at least one first set steering angle δw1 is strictly less than a predetermined threshold value δwmax1 representative of a maximum admissible deflection for the at least one left flap (12) and the at least one second set steering angle δw2 is strictly less than a second predetermined threshold value δwmax2 representative of a maximum admissible deflection for the at least one right flap (12').

4. Method according to any of Claims 1-3, **characterised in that** the lift objective $F_{rotor}$* of the principal rotor (3) is calculated using the following formula:

$$Frotor* = \frac{Czm* \times \rho \times b \times c \times R \times U^2}{6}$$

where: $\rho$ is the density of the external ambient air, b is the number of blades (31) of the at least one principal rotor (3), c is a cord of an aerofoil of the blades (31), R is a radius of the at least one principal rotor (3), U is a tangential speed at the end of the blades (31).

5. Method according to any of Claims 1-4, **characterised in that** during an autorotation flight phase of the at least one principal rotor (3) distinct from the nominal flight phase, the at least one first set steering angle $\delta w1$ is given a first predetermined threshold value $\delta wmax1$ representative of a maximum admissible deflection for the at least one left flap (12) and the at least one second set steering angle $\delta w2$ is given a second predetermined threshold value $\delta wmax2$ representative of a maximum admissible deflection for the at least one right flap (12').

6. Method according to any of Claims 1-5, **characterised in that** the lift of the at least two wing-halves (11, 11') is adjusted symmetrically (46) in relation to the anteroposterior median plane of the fuselage (2), the at least one first set steering angle $\delta w1$ being equal to the at least one second set steering angle $\delta w2$.

7. Method according to Claim 6, **characterised in that** a current value of a lift for the principal rotor (3) is measured and a closed-loop control (45) for symmetrically adjusting the lift of the at least two wing-halves (11, 11') is piloted.

8. Method according to any of Claims 1-5, **characterised in that** when on one hand the true air speed TAS is greater than a predetermined threshold value TAS1 and on the other hand the flight parameters of the hybrid rotorcraft (1) allow the verification that the hybrid rotorcraft (1) is in a stabilised flight phase, the lift of the at least two wing-halves (11, 11') is adjusted dissymmetrically (47) in relation to the anteroposterior median plane of the fuselage (2), the at least one first set steering angle $\delta w1$ being distinct from the at least one second set steering angle $\delta w2$.

9. Method according to Claim 8, **characterised in that** the lift of the at least two wing-halves (11, 11') is adjusted dissymmetrically (47) so that one lateral cyclic pitch of the blades (31) of the principal rotor (3) is equal to one reference lateral cycle pitch.

10. Method according to Claim 8, **characterised in that** the lift of the at least two wing-halves (11, 11') is adjusted dissymmetrically (47) so that a lateral bending moment of a mast of the principal rotor (3) is equal to a reference lateral bending moment during the stabilised flight phase.

11. Method according to any of Claims 8-10, **characterised in that** the lift of the at least two wing-halves (11, 11') is adjusted dissymmetrically (47) in the event of malfunction of one of the at least one left flap (12) and at least one right flap (12').

12. Hybrid rotorcraft (1) including:

- a fuselage (2),
- at least one principal rotor (3) equipped with a plurality of blades (31), the at least one principal rotor (3) turning in relation to the fuselage (2) at a rotation speed NR,
- at least one propulsive or tractive propeller (4, 4'),
- at least two wing-halves (11, 11') positioned on either side of an anteroposterior median plane of the fuselage (2), the at least two wing-halves (11, 11') containing on one hand at least one left wing-half (11) containing a fixed left structure (13) secured to the fuselage (2) and at least one left flap (12) mobile in relation to the fixed left structure (13) and on the other hand at least one right wing-half (11') containing a fixed right structure (13') secured to the fuselage (2) and at least one right flap (12') mobile in relation to the fixed right structure (13'), and
- a command system (40) linked to the at least one left flap (12) and to the at least one right flap (12'), the command system (40) being configured to generate automatically at least one first set steering angle $\delta w1$ for the at least one left flap (12) in relation to the fixed left structure (13) and at least one second set steering angle $\delta w2$ for the at least one right flap (12') in relation to the fixed right structure (13')

**characterised in that** the command system (40) is configured to apply the method (20) according to any of claims 1-11.

Fig.1

20

21,46,47

22

23

24

25

$\delta_{W1}, \delta_{W2}$    26

Fig.2

44    46    45

$$\delta_{W1} = \delta_{W2}$$

+

−

Fig.3

41

TAS > TAS1

42

$$\delta_{W1} \neq \delta_{W2}$$

47

Fig.4

Fig.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2990684
- EP 2666718 A
- US 8052094 B
- EP 3118112 A